# EUROPÄISCHE PATENTSCHRIFT

(11) **EP 3 177 400 B1**
(45) Veröffentlichungstag und Bekanntmachung des Hinweises auf die Patenterteilung: **05.06.2024**
(21) Anmeldenummer: 15745210.3
(22) Anmeldetag: 04.08.2015
(51) Int. Cl.: B01J 37/02, B01J 37/03, B01J 23/10, B01J 23/40, B01J 23/46, B01D 53/94, F01N 3/08

(54) **KATALYSATOR ZUR REDUKTION VON STICKOXIDEN UND NOX-REDUKTIONSVERFAHREN MITTELS DESSELBEN**
CATALYST FOR REDUCING NITROGEN OXIDES AND NOX REDUCTION PROCESS USING IT
CATALYSEUR DESTINÉ À LA RÉDUCTION D'OXYDE D'AZOTE ET UN PROCÉDÉ DE RÉDUCTION DES NOX

(30) Priorität: 05.08.2014 EP 14179780
(43) Veröffentlichungstag der Anmeldung: 14.06.2017
(73) Patentinhaber: Umicore AG & Co. KG, 63457 Hanau-Wolfgang (DE)
(72) Erfinder: UTSCHIG, Thomas, 60598 Frankfurt am Main (DE); HOYER, Ruediger, 63755 Alzenau-Hoerstein (DE); MUELLER, Elena, 64319 Pfungstadt (DE)
(86) Internationale Anmeldenummer: PCT/EP2015/067883
(87) Internationale Veröffentlichungsnummer: WO 2016/020351

(56) Entgegenhaltungen:
- WO-A1-2012/029050
- WO-A1-2014/108362
- Sasol: "DOPED ALUMINAS Silica-Aluminas Mixed Metal Oxides Hydrotalcites", , 4 July 2016 (2016-07-04), XP055285462, Retrieved from the Internet: URL:http://www.sasolgermany.de/fileadmin/d oc/alumina/0271.SAS-BR-Inorganics_Siral_Si ralox_WEB.pdf [retrieved on 2016-07-04]

## Beschreibung

Die vorliegende Erfindung betrifft einen Katalysator zur Reduktion von Stickoxiden, das im Abgas mager betriebener Verbrennungsmotoren enthalten ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Zur Entfernung der Stickoxide sind sogenannte Stickoxid-Speicherkatalysatoren, für die auch der Begriff "Lean NOx Trap" oder LNT üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.

Mit der Veränderung der Abgasgesetzgebung nach Euro 6 werden zukünftige Abgassysteme sowohl bei kalten Temperaturen im Stadtzyklus, als auch bei hohen Temperaturen, wie sie bei hohen Lasten auftreten, ausreichende NOₓ-Konvertierung aufweisen müssen. Bekannte Stickoxid-Speicherkatalysatoren zeigen aber entweder eine ausgeprägte NOₓ-Speicherung bei niedrigen oder bei hohen Temperaturen. Eine gute NOₓ-Konvertierung über einen breiten Temperaturbereich von 200 bis 450°C, die zur Erfüllung künftiger Abgasgesetzgebung unerlässlich ist, kann bisher nicht erreicht werden.

Die EP 0 885 650 A2 beschreibt einen Abgasreinigungskatalysator für Verbrennungsmotoren mit zwei katalytisch aktiven Schichten auf einem Tragkörper. Die auf dem Tragkörper befindliche Schicht umfasst ein oder mehrere hochdisperse Erdalkalioxide, mindestens ein Platingruppenmetall, sowie wenigstens ein feinteiliges, Sauerstoff speicherndes Material. Dabei stehen die Platingruppenmetalle mit allen Bestandteilen der ersten Schicht in enger Berührung. Die zweite Schicht steht mit dem Abgas in direktem Kontakt und enthält mindestens ein Platingruppenmetall, sowie wenigstens ein feinteiliges, Sauerstoff speicherndes Material. Nur ein Teil der feinteiligen Feststoffe der zweiten Schicht dient als Träger für die Platingruppenmetalle. Der Katalysator ist ein Dreiwegekatalysator, der die schädlichen Abgaskomponenten im Wesentlichen bei stöchiometrischen Bedingungen, d.h. bei der Luftzahl λ von 1 umsetzt.

Aus der US2009/320457 ist ein Stickoxid-Speicherkatalysator bekannt, der zwei übereinander liegende Katalysatorschichten auf einem Trägersubstrat umfasst. Die untere, direkt auf dem Trägersubstrat liegende Schicht umfasst ein oder mehrere Edelmetalle, sowie ein oder mehrere Stickoxid-Speicherkomponenten. Die obere Schicht umfasst ein oder mehrere Edelmetalle, sowie Ceroxid und ist frei von Alkali- oder Erdalkalikomponenten.

Katalysatorsubstrate, die Stickoxid-Speichermaterialien enthalten und zwei oder mehr Schichten aufweisen, sind auch in der WO 2012/029050 beschrieben. Die erste Schicht befindet sich direkt auf dem Trägersubstrat und umfasst Platin und/oder Palladium, während sich die zweite Schicht auf der ersten befindet und Platin umfasst. Beide Schichten enthalten außerdem ein oder mehrere Sauerstoffspeichermaterialien und ein oder mehrere Stickoxid-Speichermaterialien, die ein oder mehrere Alkali- und/oder Erdalkalimetalle umfassen. Die Gesamtmenge an Alkali- und Erdalkalimetall in den Stickoxid-Speichermaterialien beträgt 0,18 bis 2,5 g/in³, berechnet als Alkalimetalloxid M₂O und Erdalkalimetalloxid MO.

Auch die WO2014/108362 offenbart einen zweischichtigen Stickoxid-Speicherkatalysator, wobei die untere Schicht keine Erdalkaliverbindung und die obere Schicht basisches Magnesium-Aluminium-Mischoxid enthält.

Die vorliegende Erfindung betrifft einen Stickoxid-Speicherkatalysator aus mindestens zwei katalytisch aktiven Washcoatschichten auf einem Tragköper, wobei
- eine untere Washcoatschicht A Ceroxid in einer Menge von 110 bis 180 g/l bezogen auf das Volumen des Tragkörpers, eine Erdalkaliverbindung, Platin und Palladium enthält;
- eine obere Washcoatschicht B, die über der Washcoatschicht A angeordnet ist, Ceroxid, sowie Platin, Palladium und Rhodium enthält und frei ist von Alkali- und Erdalkaliverbindungen;
- das Verhältnis von Ceroxid in Washcoatschicht A zu Ceroxid in Washcoatschicht B, gerechnet jeweils in g/l , bezogen auf das Volumen des Tragkörpers, 1:1 bis 5:1 beträgt, wobei die Summe von Ceroxid in Washcoatschicht A und Washcoatschicht B, gerechnet in g/l und bezogen auf das Volumen des Tragkörpers, 132 bis 240 g/l beträgt;
- das Verhältnis Pt:Pd gerechnet jeweils in g/l , bezogen auf das Volumen des Tragkörpers, in Washcoatschicht A und Washcoatschicht B gleich ist und 2:1 bis 20:1 beträgt;
- die Summe von Platin und Palladium, gerechnet jeweils in g/l und bezogen auf das Volumen des Tragkörpers, in Washcoatschicht A und Washcoatschicht B gleich sind; und
- das Verhältnis der Konzentrationen von Platin und Palladium in Washcoatschicht A zu Platin und Palladium in Washcoatschicht B, jeweils bezogen auf die Gesamtmasse der jeweiligen Washcoatschicht, gerechnet jeweils in g/l , bezogen auf das Volumen des Tragkörpers, 1:1 bis 1:5 beträgt.
- wobei die Erdalkaliverbindung in Washcoatschicht A Magnesiumoxid, Bariumoxid und/ oder Strontiumoxid ist und wobei das Trägermaterial für die Edelmetalle Aluminiumoxid oder Aluminiumoxid, das durch 1 bis 6 Gew.-% Lanthanoxid stabilisiert ist, ist. H

Das in den Washcoatschichten A und B eingesetzte Ceroxid kann handelsüblicher Qualität sein, d.h. einen Ceroxid-Anteil von 90 bis 100 Gew.-% aufweisen.

In einer Ausführungsform der vorliegenden Erfindung wird Ceroxid in der Washcoatschicht A in einer Menge von 110 bis 160 g/l, beispielsweise 125 bis 145 g/l, eingesetzt. In der Washcoatschicht B wird Ceroxid in Mengen von 22 bis 120 g/l, beispielsweise 40 bis 100 g/l oder 45 bis 65 g/l eingesetzt.

Die Gesamt-Washcoatbeladung des Tragkörpers beträgt in Ausführungsformen der vorliegenden Erfindung 300 bis 600 g/l, bezogen auf das Volumen des Tragkörpers. Daraus ergibt sich dass die Beladung mit Washcoatschicht A 150 bis 500 g/l und die Beladung mit Washcoatschicht B 50 bis 300 g/l, jeweils bezogen auf das Volumen des Tragkörpers, beträgt. In weiteren Ausführungsformen der vorliegenden Erfindung beträgt die Beladung mit Washcoatschicht A 250 bis 300g/l, und mit Washcoatschicht B 50 bis 150 g/l, jeweils bezogen auf das Volumen des Tragkörpers.

Das Verhältnis Platin zu Palladium ist in den Washcoatschichten A und B gleich und beträgt in Ausführungsformen der vorliegenden Erfindung beispielsweise 4:1 bis 18:1 oder 6:1 bis 16:1, beispielsweise 8:1, 10:1, 12:1 oder 14:1.

In Ausführungsformen der vorliegenden Erfindung enthält Washcoatschicht A als weiteres Edelmetall Rhodium. Rhodium liegt in diesem Fall insbesondere in Mengen von 0,1 bis 10 g/ft³ (entspricht 0,003 bis 0,35 g/l), bezogen auf das Volumen des Tragkörpers, vor.

Sowohl in der Washcoatschicht A, als auch in der Washcoatschicht B liegen die Edelmetalle Platin und Palladium und gegebenenfalls Rhodium auf geeignetem Trägermaterial Gemäß der vorliegenden Erfindung wird als Trägermaterial für die Edelmetalle Aluminiumoxid verwendet, insbesondere solches, das durch 1 bis 6 Gew.-%, insbesondere 4 Gew.-%, Lanthanoxid stabilisiert ist.

Als Erdalkaliverbindung in der Washcoatschicht A kommen insbesondere Oxide, Carbonate oder Hydroxide von Magnesium, Strontium und Barium in Frage, besonders Magnesiumoxid, Bariumoxid und Strontiumoxid.

In Ausführungsformen der vorliegenden Erfindung liegt die Erdalkaliverbindung in Mengen von 10 bis 50 g/l, besonders 15 bis 20 g/l, berechnet als Erdalkali- bzw. Alkalioxid, vor.

In Ausführungsformen der vorliegenden Erfindung enthält der Stickoxid-Speicherkatalysator kein basisches Magnesium-Aluminium-Mischoxid.

In einer bevorzugten Ausführungsform betrifft die vorliegende Erfindung einen Stickoxid-Speicherkatalysator aus mindestens zwei katalytisch aktiven Washcoatschichten auf einem Tragköper,
wobei
- eine untere Washcoatschicht A
   ∘ Ceroxid in einer Menge von 100 bis 160 g/l,
   ∘ Platin und Palladium im Massenverhältnis 10:1, sowie
   ∘ Magnesiumoxid und/oder Bariumoxid; enthält und
- eine obere Washcoatschicht B über der unteren Washcoatschicht A angeordnet ist und
   ∘ keine Erdalkaliverbindung und keine Alkaliverbindung,
   ∘ Platin und Palladium im Massenverhältnis 10:1, sowie
   ∘ Ceroxid in einer Menge von 45 bis 65 g/l
enthält, wobei die Washcoatschicht A in Mengen von 250 bis 350 g/l und die Washcoatschicht B in Mengen von 80 bis 130 g/l vorliegt und wobei sich die Mengenangabe g/l jeweils auf das Volumen des Tragkörpers bezieht.

Die Aufbringung der katalytisch aktiven Waschcoatschichten A und B auf den Tragkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

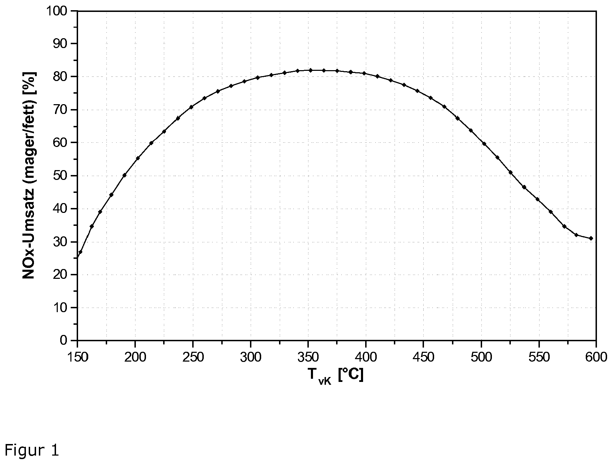

Die erfindungsgemäßen Stickoxid-Speicherkatalysatoren eignen sich in hervorragender Weise zur Konvertierung von NOₓ in Abgasen von Kraftfahrzeugen, die mit mager betriebenen Motoren, etwa Dieselmotoren, betrieben werden. Sie erreichen eine gute NOx-Konvertierung bei Temperaturen von circa 200 bis 450°C, ohne dass NOx-Konvertierung bei hohen Temperaturen negativ beeinflusst wird. Überraschenderweise sind sie bei Temperaturen von T<300°C den aus der WO 2014/108362 bekannten Katalysatoren überlegen. So ergibt sich aus Figur 2a) der WO2014/108362 eine NOx-Konvertierung des Katalysators K1 bei 250°C von 50%, während der erfindungsgemäße Katalysator K1 gemäß unten stehendem Beispiel 1 diesen Umsatz schon deutlich unter200°C erreicht, siehe Figur 1. Die erfindungsgemäßen Stickoxid-Speicherkatalysatoren sind somit für Euro 6 Anwendungen geeignet.

Die vorliegende Erfindung betrifft somit auch ein Verfahren zur Konvertierung von NOₓ in Abgasen von Kraftfahrzeugen, die mit mager betriebenen Motoren, etwa Dieselmotoren, betrieben werden, das dadurch gekennzeichnet ist, dass das Abgas über den oben beschriebenen Katalysator geleitet wird.

Ausgestaltungen des erfindungsgemäßen Verfahrens hinsichtlich des Stickoxid-Speicherkatalysators entsprechen den oben stehenden Beschreibungen.

Die Erfindung wird in den nachstehenden Beispielen und Figuren näher erläutert.

Figur 1: NOx-Konvertierung des Katalysators K1 in Abhängigkeit von der Temperatur.

### Beispiel 1

Zur Herstellung eines erfindungsgemäßen Katalysators wird ein wabenförmiger Keramikträger mit einer ersten Washcoatschicht A beschichtet, die Pt, Pd und Rh geträgert auf einem Lanthan-stabilisiertem Alumina, Ceroxid in einer Menge 125 g/l, sowie 20 g/l Bariumoxid und 15 g/l Magnesiumoxid enthält. Die Beladung von Pt und Pd beträgt dabei 50 g/cft (1,766 g/l) und 5 g/cft (0,177 g/l) und die Gesamtbeladung der Washcoatschicht 300 g/l bezogen auf das Volumen des Keramik-Trägers. Auf die erste Washcoatschicht wird eine weitere Washcoatschicht B aufgebracht, die ebenfalls Pt und Pd sowie Rh geträgert auf einem Lanthan-stabilisiertem Alumina enthält. Die Beladung von Pt, Pd und Rh in dieser Washcoatschicht beträgt 50 g/cft (1,766 g/l), 5 g/cft (0,177 g/l) und 5 g/cft (0,177 g/l). Die Washcoatschicht B enthält außerdem 55 g/l Ceroxid bei einer Washcoatbeladung der Schicht B von 101 g/l.

Der so erhaltene Katalysator wird nachstehend K1 genannt.

### Beispiele 2 bis 6

Beispiel 1 wurde wiederholt mit dem Unterschied, dass die in nachstehender Tabelle 1 angegebenen Ceroxid- bzw Edelmetallmengen eingesetzt wurden. Die so erhaltenen Katalysatoren werden K2 bis K6 genannt.

**Tabelle 1**

| Katalysator | Ceroxid Washcoat A [g/l] | Ceroxid Washcoat B [g/l] | Ceroxid-Verhältnis / B / A | (Pt+Pd)-Konzentr. B / A |
|---|---|---|---|---|
| K1 | 125 | 55 | 1 / 2,27 | 2,98 / 1 |
| K2 | 150 | 30 | 1 / 5,00 | 4,30 / 1 |
| K3 | 110 | 110 | 1 / 1,00 | 1,83 / 1 |
| K4 | 152,8 | 67,2 | 1 / 2,27 | 2,91 / 1 |
| K5 | 110 | 22 | 1 / 5,00 | 4,22 / 1 |
| K6 | 180 | 60 | 1 / 3,00 | 3,36 / 1 |

### Bestimmung der NOx-Konvertierung von K1

a) Zunächst wurde K1 16h bei 800°C in hydrothermaler Atmosphäre gealtert.
b) Die NOx-Konvertierung des erfindungsgemäßen Katalysators K1 in Abhängigkeit von der Temperatur vor dem Katalysator wurde in einem

Modellgasreaktor im sog. NOx-Umsatztest bestimmt.

In diesem wird synthetisches Abgas mit einer Stickstoffmonoxidkonzentration von 500ppm, jeweils 10 Vol.-% Kohlenstoffdioxid und Wasser, einer Konzentration von 50ppm eines kurzkettigen Kohlenwasserstoffgemisches (bestehend aus 33 ppm Propen und 17 ppm Propan) sowie einem Restsauerstoffgehalt von 7 Vol.-% bei einer Raumgeschwindigkeit von 50k/h in einem Modellgasreaktor über die jeweilige Katalysatorprobe geleitet, wobei die Gasmischung abwechselnd 80s lang einen Sauerstoffüberschuss enthält ("mageres" Gasgemisch mit Luftzahl λ von 1,47) währenddessen Stickoxide eingespeichert werden, und zur Regeneration der Katalysatorprobe 10s lang ein Sauerstoffdefizit aufweist ("fettes" Gasgemisch mit Luftzahl λ von 0,92; durch Zumischen von 5,5 Vol.-% Kohlenstoffmonoxid bei gleichzeitiger Absenkung des Restsauerstoffgehalts auf 1 Vol.-%).

Dabei wird die Temperatur mit 7,5 °C/min von 600°C auf 150°C abgesenkt und der Umsatz über jeden 90s dauernden Mager- Fett-Zyklus ermittelt. Die NOx Regenerationsfähigkeit bei 200°C ist wichtig, um Fahrverhalten im städtischen Bereich abzubilden, bei 450°C für Autobahnfahrten. Um die Euro 6 Abgasnorm zu erfüllen, ist es dabei besonders wichtig über diesen gesamten Temperaturbereich eine hohe NOx-Regenerationsfähigkeit zu zeigen.

Figur 1 zeigt die so bestimmte NOx-Konvertierung des erfindungsgemäßen Katalysators 1. Demnach beträgt der Umsatz bei 200°C 54% und bei 450°C 74%.

## Patentansprüche

1. Stickoxid-Speicherkatalysator aus mindestens zwei katalytisch aktiven Washcoatschichten auf einem Tragköper,
wobei
- eine untere Washcoatschicht A Ceroxid in einer Menge von 110 bis 180 g/l bezogen auf das Volumen des Tragkörpers, eine Erdalkaliverbindung , sowie Platin und Palladium enthält;
- eine obere Washcoatschicht B, die über der Washcoatschicht A angeordnet ist, Ceroxid, sowie Platin, Palladium und Rhodium enthält und frei ist von Alkali- und Erdalkaliverbindungen;
- das Verhältnis von Ceroxid in Washcoatschicht A zu Ceroxid in Washcoatschicht B, gerechnet jeweils in g/l , bezogen auf das Volumen des Tragkörpers, 1:1 bis 5:1 beträgt, wobei die Summe von Ceroxid in Washcoatschicht A und Washcoatschicht B, gerechnet in g/l und bezogen auf das Volumen des Tragkörpers, 132 bis 240 g/l beträgt;
- das Verhältnis Pt:Pd gerechnet jeweils in g/l , bezogen auf das Volumen des Tragkörpers, in Washcoatschicht A und Washcoatschicht B gleich ist und 2:1 bis 20:1 beträgt;
- die Summe von Platin und Palladium, gerechnet jeweils in g/l und bezogen auf das Volumen des Tragkörpers, in Washcoatschicht A und Washcoatschicht B gleich sind; und
- das Verhältnis der Konzentrationen von Platin und Palladium in Washcoatschicht A zu Platin und Palladium in Washcoatschicht B, jeweils bezogen auf die Gesamtmasse der jeweiligen Washcoatschicht, gerechnet jeweils in g/l , bezogen auf das Volumen des Tragkörpers, 1:1 bis 1:5 beträgt,
wobei die Erdalkaliverbindung in Washcoatschicht A Magnesiumoxid, Bariumoxid und/oder Strontiumoxid ist und
wobei das Trägermaterial für die Edelmetalle Aluminiumoxid oder Aluminiumoxid, das durch 1 bis 6 Gew.-% Lanthanoxid stabilisiert ist, ist.

2. Stickoxid-Speicherkatalysator nach Anspruch 1, **dadurch gekennzeichnet, dass** die Washcoatschicht B Ceroxid in einer Menge von 22 bis 120 g/l enthält.

3. Stickoxid-Speicherkatalysator nach Anspruch 1, **dadurch gekennzeichnet, dass** die Washcoatschicht A Ceroxid in einer Menge von 110 bis 160 g/l enthält.

4. Stickoxid-Speicherkatalysator nach einem oder mehreren der Ansprüche 1 bis 3, **dadurch gekennzeichnet, dass** die Gesamt-Washcoatbeladung des Tragkörpers 300 bis 600g/l, bezogen auf das Volumen des Tragkörpers, beträgt.

5. Stickoxid-Speicherkatalysator Anspruch 4, **dadurch gekennzeichnet, dass** die Beladung mit Washcoatschicht A 150 bis 500 g/l und die Beladung mit Washcoatschicht B 50 bis 300 g/l, jeweils bezogen auf das Volumen des Tragkörpers, beträgt.

6. Stickoxid-Speicherkatalysator nach Anspruch 4, **dadurch gekennzeichnet, dass** die Beladung mit Washcoatschicht A 250 bis 300 g/l und mit Washcoatschicht B 50 bis 150 g/l, jeweils bezogen auf das Volumen des Tragkörpers, beträgt.

7. Stickoxid-Speicherkatalysator nach einem oder mehreren der Ansprüche 1 bis 6, **dadurch gekennzeichnet, dass** das Verhältnis Platin zu Palladium 4:1 bis 18:1 beträgt.

8. Stickoxid-Speicherkatalysator nach einem oder mehreren der Ansprüche 1 bis 6, **dadurch gekennzeichnet, dass** das Verhältnis Platin zu Palladium 6:1 bis 16:1 beträgt.

9. Stickoxid-Speicherkatalysator nach einem oder mehreren der Ansprüche 1 bis 8, **dadurch gekennzeichnet, dass** Washcoatschicht A Rhodium enthält.

10. Stickoxid-Speicherkatalysator nach Anspruch 9, **dadurch gekennzeichnet, dass** Rhodium in Mengen von 0,003 bis 0,35 g/l, bezogen auf das Volumen des Tragkörpers, vorliegt.

11. Stickoxid-Speicherkatalysator nach Anspruch 1, **dadurch gekennzeichnet, dass** er
- eine untere Washcoatschicht A, die
∘ Ceroxid in einer Menge von 100 bis 160 g/l,
∘ Platin und Palladium im Verhältnis 10:1, sowie
∘ Magnesiumoxid und/oder Bariumoxid; enthält und
- eine obere Washcoatschicht B über der unteren Washcoatschicht A angeordnet ist, die
∘ keine Erdalkaliverbindung und keine Alkaliverbindung,
∘ Platin und Palladium im Verhältnis 10:1, sowie
∘Ceroxid in einer Menge von 45 bis 65 g/l
enhältt, wobei die Washcoatschicht A in Mengen von 250 bis 350 g/l und die Washcoatschicht B in Mengen von 80 bis 130 g/l vorliegt und wobei sich die Mengenangabe g/l jeweils auf das Volumen des Tragkörpers bezieht.

12. Verfahren zur Konvertierung von NOₓ in Abgasen von Kraftfahrzeugen, die mit mager betriebenen Motoren betrieben werden, **dadurch gekennzeichnet, dass** das Abgas über einen Stickoxid-Speicherkatalysator gemäß Anspruch 1 geleitet wird.

## Claims

1. Nitrogen oxide storage catalyst composed of at least two catalytically active washcoat layers on a support body,
wherein
- a lower washcoat layer A contains cerium oxide in an amount of 110 to 180 g/L based on the volume of the support body, an alkaline earth compound, and platinum and palladium;
- an upper washcoat layer B located above the washcoat layer A contains cerium oxide, and platinum, palladium and rhodium, and is free of alkali compounds and alkaline earth compounds;
- the ratio of the cerium oxide in washcoat layer A to cerium oxide in washcoat layer B, calculated in each case in g/L, based on the volume of the support body, is 1:1 to 5:1, wherein the total of cerium oxide in washcoat layer A and washcoat layer B, calculated in g/L and based on the volume of the support body, is 132 to 240 g/L;
- the ratio Pt:Pd, calculated in each case in g/L, based on the volume of the support body, in washcoat layer A and washcoat layer B is equal and is 2:1 to 20:1;
- the totals of platinum and palladium, calculated in each case in g/L and based on the volume of the support body, in washcoat layer A and washcoat layer B are equal; and
- the ratio of the concentrations of platinum and palladium in washcoat layer A to platinum and palladium in washcoat layer B, in each case based on the total mass of the respective washcoat layer, calculated in each case in g/L, based on the volume of the support body, is 1:1 to 1:5,
wherein the alkaline earth compound in washcoat layer A is magnesium oxide, barium oxide and/or strontium oxide, and
wherein the carrier material for the precious metals is aluminum oxide or aluminum oxide stabilized by 1 to 6 wt.% lanthanum oxide.

2. Nitrogen oxide storage catalyst according to claim 1,
**characterized in that** the washcoat layer B contains cerium oxide in an amount of 22 to 120 g/L.

3. Nitrogen oxide storage catalyst according to claim 1,
**characterized in that** the washcoat layer A contains cerium oxide in an amount of 110 to 160 g/L.

4. Nitrogen oxide storage catalyst according to one or more of claims 1 to 3, **characterized in that** the total washcoat loading of the support body is 300 to 600 g/L, based on the volume of the support body.

5. Nitrogen oxide storage catalyst according to claim 4,
**characterized in that** the loading with washcoat layer A is 150 to 500 g/L and the loading with washcoat layer B is 50 to 300 g/L, in each case based on the volume of the support body.

6. Nitrogen oxide storage catalyst according to claim 4,
**characterized in that** the loading with washcoat layer A is 250 to 300 g/L and the loading with washcoat layer B is 50 to 150 g/L, in each case based on the volume of the support body.

7. Nitrogen oxide storage catalyst according to one or more of claims 1 to 6, **characterized in that** the ratio of platinum to palladium is 4:1 to 18:1.

8. Nitrogen oxide storage catalyst according to one or more of claims 1 to 6, **characterized in that** the ratio of platinum to palladium is 6:1 to 16:1.

9. Nitrogen oxide storage catalyst according to one or more of claims 1 to 8, **characterized in that** washcoat layer A contains rhodium.

10. Nitrogen oxide storage catalyst according to claim 9,
**characterized in that** rhodium is present in amounts of 0.003 to 0.35 g/L, based on the volume of the support body.

11. Nitrogen oxide storage catalyst according to claim 1,
**characterized in that** it comprises
- a lower washcoat layer A that contains
∘ cerium oxide in an amount of 100 to 160 g/L,
∘ platinum and palladium in a ratio of 10:1, and
∘ magnesium oxide and/or barium oxide; and
- an upper washcoat layer B, which is located over the lower washcoat layer A and contains
∘ no alkaline earth compound and no alkali compound,
∘ platinum and palladium in a ratio of 10:1, and
∘cerium oxide in an amount of 45 to 65 g/L,
wherein the washcoat layer A is present in amounts of 250 to 350 g/L and the washcoat layer B is present in amounts of 80 to 130 g/L and wherein the indication of quantity g/L in each case relates to the volume of the support body.

12. Method for converting NOₓ in exhaust gases of motor vehicles that are operated with lean-operated engines, **characterized in that** the exhaust gas is conducted over a nitrogen oxide storage catalyst according to claim 1.

## Revendications

1. Catalyseur accumulateur d'oxyde d'azote constitué d'au moins deux couches de washcoat catalytiquement actives sur un corps de support,
dans lequel
- une couche de washcoat A inférieure contient de l'oxyde de cérium en une quantité allant de 110 à 180 g/l par rapport au volume du corps de support, un composé alcalino-terreux, ainsi que du platine et du palladium ;
- une couche de washcoat B supérieure, laquelle est disposée au-dessus de la couche de washcoat A, contient de l'oxyde de cérium, ainsi que du platine, du palladium et du rhodium et est exempte de composés alcalins et alcalino-terreux ;
- le rapport de l'oxyde de cérium dans la couche de washcoat A à l'oxyde de cérium dans la couche de washcoat B, calculé respectivement en g/l, par rapport au volume du corps de support, va de 1:1 à 5:1, dans lequel la somme de l'oxyde de cérium dans la couche de washcoat A et dans la couche de washcoat B, calculée en g/l et par rapport au volume du corps de support, va de 132 à 240 g/l ;
- les rapports Pt: Pd, calculés respectivement en g/l, par rapport au volume du corps de support, dans la couche de washcoat A et dans la couche de washcoat B, sont identiques et vont de 2:1 à 20:1 ;
- les sommes de platine et de palladium, calculées respectivement en g/l et par rapport au volume du corps de support, dans la couche de washcoat A et dans la couche de washcoat B, sont identiques ; et
- le rapport des concentrations en platine et en palladium dans la couche de washcoat A à celles en platine et en palladium dans la couche de washcoat B, respectivement par rapport à la masse totale de la couche de washcoat respective, calculé respectivement en g/l, par rapport au volume du corps de support, va de 1:1 à 1:5,
dans lequel le composé alcalino-terreux dans la couche de washcoat A est de l'oxyde de magnésium, de l'oxyde de baryum et/ou de l'oxyde de strontium et
dans lequel le matériau de support pour les métaux précieux est de l'oxyde d'aluminium ou de l'oxyde d'aluminium stabilisé par 1 à 6 % en poids d'oxyde de lanthane.

2. Catalyseur accumulateur d'oxyde d'azote selon la revendication 1, **caractérisé en ce que** la couche de washcoat B contient de l'oxyde de cérium en une quantité allant de 22 à 120 g/l.

3. Catalyseur accumulateur d'oxyde d'azote selon la revendication 1, **caractérisé en ce que** la couche de washcoat A contient de l'oxyde de cérium en une quantité allant de 110 à 160 g/l.

4. Catalyseur accumulateur d'oxyde d'azote selon une ou plusieurs des revendications 1 à 3, **caractérisé en ce que** la charge de washcoat totale du corps de support va de 300 à 600 g/l, par rapport au volume du corps de support.

5. Catalyseur accumulateur d'oxyde d'azote selon la revendication 4, **caractérisé en ce que** la charge en couche de washcoat A va de 150 à 500 g/l et la charge en couche de washcoat B va de 50 à 300 g/l, respectivement par rapport au volume du corps de support.

6. Catalyseur accumulateur d'oxyde d'azote selon la revendication 4, **caractérisé en ce que** la charge en couche de washcoat A va de 250 à 300 g/l et la charge en couche de washcoat B va de 50 à 150 g/l, respectivement par rapport au volume du corps de support.

7. Catalyseur accumulateur d'oxyde d'azote selon une ou plusieurs des revendications 1 à 6, **caractérisé en ce que** le rapport du platine au palladium va de 4:1 à 18:1.

8. Catalyseur accumulateur d'oxyde d'azote selon une ou plusieurs des revendications 1 à 6, **caractérisé en ce que** le rapport du platine au palladium va de 6:1 à 16:1.

9. Catalyseur accumulateur d'oxyde d'azote selon une ou plusieurs des revendications 1 à 8, **caractérisé en ce que** la couche de washcoat A contient du rhodium.

10. Catalyseur accumulateur d'oxyde d'azote selon la revendication 9, **caractérisé en ce que** le rhodium est présent en des quantités allant de 0,003 à 0,35 g/l, par rapport au volume du corps de support.

11. Catalyseur accumulateur d'oxyde d'azote selon la revendication 1, **caractérisé en ce qu'**il contient
- une couche de washcoat A inférieure, laquelle contient
∘ de l'oxyde de cérium en une quantité allant de 100 à 160 g/l,
∘ du platine et du palladium dans un rapport de 10:1, ainsi que
∘ de l'oxyde de magnésium et/ou de l'oxyde de baryum ; et
- une couche de washcoat B supérieure est disposée au-dessus de la couche de washcoat A inférieure, laquelle couche de washcoat B
∘ aucun composé alcalino-terreux et aucun composé alcalin,
∘ du platine et du palladium dans un rapport de 10:1, ainsi que
∘ de l'oxyde de cérium en une quantité allant de 45 à 65 g/l,
dans lequel la couche de washcoat A est présente en des quantités allant de 250 à 350 g/l et la couche de washcoat B est présente en des quantités allant de 80 à 130 g/l et dans lequel l'indication de quantité g/l se rapporte respectivement au volume du corps de support.

12. Procédé permettant la conversion de NOₓ dans des gaz d'échappement de véhicules automobiles qui fonctionnent avec des moteurs à mélange pauvre, **caractérisé en ce que** les gaz d'échappement sont guidés à travers un catalyseur accumulateur d'oxyde d'azote selon la revendication 1.
